(19) Europäisches Patentamt
European Patent Office
Office européen des brevets

(11) **EP 3 184 968 B1**

(12) **EUROPÄISCHE PATENTSCHRIFT**

(45) Veröffentlichungstag und Bekanntmachung des Hinweises auf die Patenterteilung:
**07.11.2018 Patentblatt 2018/45**

(51) Int Cl.:
***G01D 5/245*** *(2006.01)*   ***G01D 5/249*** *(2006.01)*

(21) Anmeldenummer: **16203670.1**

(22) Anmeldetag: **13.12.2016**

(54) **ABSOLUT MESSENDES LÄNGENMESSSYSTEM**

ABSOLUTE LENGTH MEASURING SYSTEM

SYSTÈME DE MESURE ABSOLUE DE LONGUEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.12.2015 DE 102015122829**

(43) Veröffentlichungstag der Anmeldung:
**28.06.2017 Patentblatt 2017/26**

(73) Patentinhaber: **Balluff GmbH**
**73765 Neuhausen a.d.F. (DE)**

(72) Erfinder:
• **Burkhardt, Thomas**
**73119 Zell (DE)**
• **Zern, Achim**
**74080 Heilbronn (DE)**

(74) Vertreter: **Jakelski & Althoff**
**Patentanwälte PartG mbB**
**Patentanwälte**
**Partnerschaftsgesellschaft**
**Mollenbachstraße 37**
**71229 Leonberg (DE)**

(56) Entgegenhaltungen:
WO-A1-2011/131232   DE-A1-102008 055 680
US-A1- 2001 003 422   US-A1- 2010 102 804
US-A1- 2011 248 709

EP 3 184 968 B1

**Beschreibung**

Die Erfindung geht aus von einem absoluten Längenmesssystem bzw. Positionsmesssystem mit einem vorzugsweise magnetisch kodierten, eine Inkrementalspur sowie wenigstens eine Absolutspur aufweisenden Maßkörper, nach der Gattung des unabhängigen Anspruchs 1.

**Stand der Technik**

Inkrementelle Messsysteme

Auf dem Gebiet der Messtechnik sind Magnetband-Längenmesssysteme bekannt geworden, bei denen ein Sensorkopf über einen mit wechselnder Polarität periodisch magnetisierten Maßkörper ("Inkrementalspur") bewegt wird. Durch die Bewegung wird in dem Sensorkopf bzw. Magnetfeldsensor im Idealfall ein sinusförmiges und cosinusförmiges Sensorsignal erzeugt ("Inkrementalsensor"). Je nach magnetischem Messprinzip wiederholt sich der Signalverlauf im Sensorkopf mit jedem Pol des Maßkörpers (z.B. bei GMR- oder AMR-Sensoren, welche das Quadrat der magnetischen Flussdichte $B^2$ messen) oder mit jedem Polpaar des Maßkörpers (z.B. bei Hall-Sensoren, welche eine Ausgangsspannung liefern, die proportional zum Produkt aus magnetischer Feldstärke und Strom ist). Die Positionsbestimmung an einer genannten Inkrementalspur erfolgt in an sich bekannter Weise, z.B. mittels trigonometrischer Funktionen.

Absolute Messsysteme mit mehreren Spuren

An einem genannten Maßkörper gibt es mehrere Spuren. Zusätzlich zu einer genannten Inkrementalspur eines genannten Inkrementalsensors enthält ein genannter Sensorkopf bei einem absoluten Messsystem wenigstens einen Absolutsensor, um eine oder mehrere Absolutspuren abzutasten. Sowohl der Inkrementalsensor als auch der Absolutsensor sind dabei meist in einem gemeinsamen Sensorkopfgehäuse angeordnet. Die Inkremental-Position gibt die Position des Sensors bzw. Sensorkopfes innerhalb eines Poles bzw. Polpaares (je nach physikalischem Messprinzip) an bzw. zurück. Die absolute Position kann mit folgendem Algorithmus berechnet werden:

$$\text{Position (absolut)} = \text{Position (im Pol)} + \text{Polnummer} * \text{Polbreite}.$$

Zur Bestimmung der Polnummer wird meist eine digital Pseudo-Random-Coded- (kodierte) (=PRC-) Spur mit logischen Werten 0 und 1 entsprechend den N- und S-Polen eingesetzt.

Aus der WO 01/09568 A1 geht hervor, zusätzlich zu genannten einzelnen Polen eines Maßkörpers auch Polpaare in Form eines sogenannten "invertierenden Kodewortes" zu verwenden bzw. auszuwerten. Die genannte Kodierung logischer Werte erfolgt dabei nicht durch einen einzigen Pol, bei einem magnetischen Messsystem der N-Pol oder der S-Pol, sondern durch wenigstens zwei in der genannten Absolutspur in Messrichtung jeweils zusammengefasste Pole. Dabei weist ein solches Polpaar die doppelte Polbreite der Inkrementalspur auf, wodurch ein logischer Wert durch die Polabfolge N-S bzw. die abgeänderte Polabfolge S-N gebildet wird. Der Vorteil dieser Anordnung von Polpaaren ist, dass bei einem Übergang von einer logischen 0 auf 1 oder von einer logischen 1 auf 0 immer zwei benachbarte gleichsinnige Pole auftreten. Diese gleichsinnigen Pole mit der doppelten Polbreite lassen sich aufgrund der Verdopplung der Feldstärke besser sensieren als Pole mit nur einfacher Polbreite. Daher kann insbesondere der Luftspalt bei einem solchen Längenmesssystem vergrößert werden.

Aus der DE102008055680 A1 ist ein weiterer Maßkörper mit einer Absolutspur und einer Inkrementalspur bekannt, wobei die Absolutspur Polsegmente mit unterschiedlichen Größen aufweist.

**Offenbarung der Erfindung**

Der Erfindung liegt die Aufgabe zugrunde, ein hier betroffenes Längen- bzw. Positionsmesssystem anzugeben, mit dem die zur Auswertung einer genannten PRC-Spur erforderliche Anzahl an genannten Sensoren reduziert wird. Damit verkürzt sich auch die Länge eines aus den Sensoren gebildeten PRC-Sensorarrays zur Auswertung der PRC-Spur und damit auch die Gehäuselänge sowie die Herstellungskosten.

Der Erfindung liegt der Gedanke zugrunde, bei einem hier betroffenen absoluten Messsystem einen Maßkörper vorzusehen, bei dem eine Absolutspur bzw. ihre Pole anhand von Bereichen unterschiedlicher Feldstärke bzw. Signalamplitude sozusagen durch "Rasterung" bzw. "Unterteilung" in weitere "Unterspuren" bzw. Segmente unterteilt sind.

Durch die dadurch ermöglichte Mischung von N- und S-Polen können die genannten logischen Werte weiter verfeinert werden, so dass z.B. auch halbe Werte, quasi im Wege einer "Analogisierung", möglich sind. Dadurch lässt sich die Anzahl der pro Sensor erfassten Messwerte erhöhen, und zwar von den genannten 2 logischen Werten (0 und 1) auf z.B. fünf quasi analog quantisierte Werte bzw. Quantisierungsstufen. Dadurch lassen sich mit n Sensoren nicht nur $2^n$ Pole detektieren, sondern in dem Beispiel $5^n$ Pole. Dadurch wird die messbare Länge größer bzw. die Länge des PRC-Sensorarrays kürzer.

Das vorgeschlagene Konzept bietet, verglichen mit rein digitalen Kodes auf der Grundlage von Einzelpolen, die folgenden Vorteile. Gegenüber binärer Kodierung sind für die gleiche Messlänge weniger Sensoren erforderlich, woraus sich wiederum ein Kostenvorteil sowie die Möglichkeit der Implementierung eines hier betroffenen Längenmesssystems in einem kürzeren Gehäuse ergeben. Durch die Möglichkeit der Kodierung über Polpaare lässt sich ein erheblich größerer Abstand zwischen dem Maßkörper und dem Sensorkopf erreichen.

Bei einem hier betroffenen Längen- bzw. Positionsmesssystem, welches einen zumindest lokal im Wesentlichen linearen Maßkörper sowie wenigstens einen relativ zu dem Maßkörper zu verfahrenden Sensor aufweist, wobei der Maßkörper eine Inkrementalspur und wenigstens eine Absolutspur umfasst und wobei die Inkrementalspur sowie die wenigstens eine Absolutspur in Längsrichtung des Maßkörpers angeordnete Pole aufweisen, wird insbesondere vorgeschlagen, dass die Pole der wenigstens einen Absolutspur in dem Sensor wenigstens zwei Bereiche mit unterschiedlicher Feldstärke bzw. Signalamplitude bilden. Zur Realisierung einer genannten analog quantisierten Magnetisierung können die Pole der wenigstens einen Absolutspur bevorzugt in wenigstens zwei Segmente oder Bereiche unterschiedlicher Magnetisierung oder Feldstärke unterteilt sein, um eine genannte analoge bzw. logische Abstufung zu ermöglichen. Weiter kann vorgesehen sein, dass die wenigstens eine Absolutspur eine Mischung aus Polen unterschiedlicher Polarität bereitstellt, mittels der wenigstens zweifach abgestufte logische Werte erzeugt werden. Dabei können zwei oder mehrere Segmente dazu genutzt werden, eine relativ schwächere oder relativ höhere Magnetisierung zu realisieren.

Alternativ können die genannten Segmente bzw. die genannte analoge/logische Abstufung durch eine Teilmagnetisierung (gegenüber einer 100%-igen Magnetisierung) realisiert sein. Auch mittels einer solchen Teilmagnetisierung lässt sich demnach eine genannte analoge Kodierung erreichen.

Es ist ferner anzumerken, dass ein genannter, im Wesentlichen linearer Maßkörper auch durch einen ringförmigen oder teilringförmigen Maßkörper gebildet sein kann, wobei der Maßkörper dann zumindest lokal linear ausgebildet ist.

Auch kann vorgesehen sein, dass die von der Absolutspur bereitgestellten logischen Werte von Polpaaren von gegenüber den entsprechenden Polpaaren der Inkrementalspur

1. vollständig gegensinnig über
2. teilweise gegensinnig, über
3. neutral, über
4. teilweise gleichsinnig sowie
5. vollständig gleichsinnig

ausgebildet sind. Dadurch wird eine relativ einfache Realisierung einer genannten Abstufung ermöglicht. Insbesondere kann dabei vorgesehen sein, dass die von der Absolutspur bereitgestellten logischen Werte zwischen einem Wert +1 und einem Wert -1 variieren, wobei drei oder mehr Zwischenstufen mit z.B. den logischen Werten 0,5, 0 und -0,5 gebildet sind. Damit ergeben sich demnach fünf logische Werte.

Mit n Unterteilungen lassen sich nun (n + 1) logische Werte erzeugen, wobei jedoch eine möglichst gleichmäßige Mischung der Unterteilungen vorteilhaft ist.

Im Fall eines magnetische Pole aufweisenden Längen- bzw. Positionsmesssystems kann ferner vorgesehen sein, dass ein in der absoluten Spur bei jedem Polpaar auftretender Vorzeichenwechsel der Signalamplitude bezüglich einem Mittelwert von Null von etwa +/-0,01 Tesla bei einer 100-prozentigen Magnetisierung über etwa +/- 0,005 Tesla zu Null und dann gegenphasig wieder auf etwa +/- 0,01 Tesla beträgt. Diese Werte der Magnetisierung ermöglichen auch bei einem von dem Maßkörper beabstandeten Sensor noch eine sichere Sensierung bzw. Erfassung der genannten abgestuften logischen Werte. Bevorzugt beträgt bei einem Messabstand bzw. Luftspalt von 6 mm der genannte Vorzeichenwechsel der Signalamplitude bezüglich dem Mittelwert von Null etwa +/- 0,007 Tesla bei einer 100-prozentigen Magnetisierung über etwa +/- 0,004 Tesla zu Null und dann gegenphasig wieder auf etwa +/- 0,007 Tesla.

Die Erfindung lässt sich nicht nur bei magnetischen Messsystemen, sondern auch bei optischen, kapazitiven, induktiven oder sonstigen Mess- bzw. Wirkprinzipien entsprechend anwenden, soweit der jeweilige Sensor bzw. Sensorkopf eine endliche Ausdehnung bzw. Größe in Polrichtung besitzt.

**Kurzbeschreibung der Figuren**

Fig. 1    zeigt einen Maßkörper eines hier betroffenen Längenmesssystems mit einer Inkrementalspur (oben) und einer PRC-Spur (unten), gemäß dem Stand der Technik.

Fig. 2    zeigt einen einzelnen Pol eines erfindungsgemäß ausgebildeten Maßkörpers eines hier betroffenen Längenmesssystems, und zwar mit einer fünfstufigen Abstufung des Magnetfeldes.

Fig. 3    zeigt anhand eines Polpaares eine erfindungsgemäß durchgeführte logische Kodierung von fünf Werten.

Fig. 4    zeigt einen Ausschnitt einer Inkrementalspur und einer daran angeordneten Absolutspur eines erfindungsgemäß ausgebildeten Maßkörpers eines hier betroffenen Längenmesssystems, wobei mittels der in Fig. 2 gezeigten fünf Stufen fünf "analoge" Werte bereitgestellt werden.

Fig. 5    zeigt einen erfindungsgemäß ausgebildeten Maßkörper mit inkrementaler und fünfstufiger PRC-Kodierung.

Fig. 6a, b    zeigen eine Simulation der Magnetfeldstärke bei einem erfindungsgemäß analog kodierten PRC-Maßkörper ohne Inkrementalspur.

Fig. 7a, b    illustrieren zwei beispielhafte geometrische Einflüsse der Gehäuselänge auf die Messauflösung eines gebogenen Maßkörpers.

## Detaillierte Beschreibung der Ausführungsbeispiele

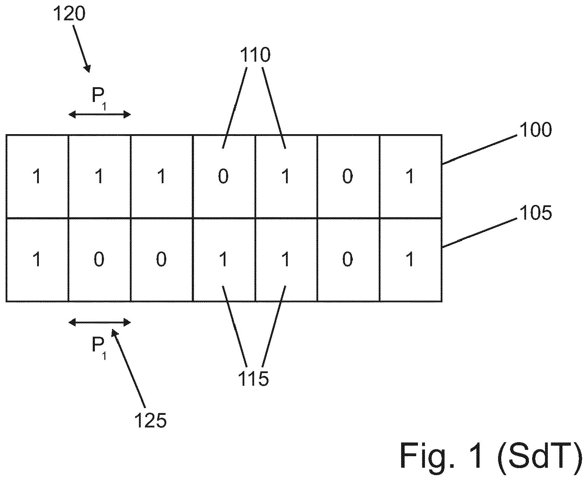

In der Fig. 1 ist schematisch ein an sich bekannter linearer Maßkörper eines hier betroffenen Magnetband-Längenmesssystem mit einer Inkrementalspur 100 und einer mit der Inkrementalspur 100 fest bzw. ortsfest verbundenen Pseudo-Random-Coded- (PRC-) Absolutspur 105 dargestellt. Die Inkrementalspur 100 weist binär kodierte Pole 110 und die Absolutspur 105 ebenfalls binär kodierte Pole 115 auf. Sowohl die Absolutspur 105 als auch die Inkrementalspur 100 weisen eine jeweils übereinstimmende Polbreite 'P1' 120, 125 auf.

Neben an sich bekannten Anwendungsszenarien mit einer im Wesentlichen linearen Messstrecke kann ein solcher Maßkörper 100, 105 auch auf dem Umfang einer Welle, z.B. einer nicht gezeigten Antriebswelle eines Windkraftwerks oder dergleichen, angeordnet sein. Das Magnetband-Längenmesssystem dient dabei zur Überwachung bzw. Wartung des Windkraftwerks, wobei die Position der Antriebswelle eindeutig erfasst werden muss.

Die nachfolgenden Ausführungsbeispiele beruhen darauf, dass durch Mischung von Nord- und Südpolen, bzw. durch Mischung von nicht-magnetisierten oder teil-magnetisierten Bereichen, sich unterschiedlich starke Magnetfelder einstellen bzw. modulieren lassen. Dabei heben sich bei einem größeren Abstand gleich große N- und S-Pole gegenseitig auf.

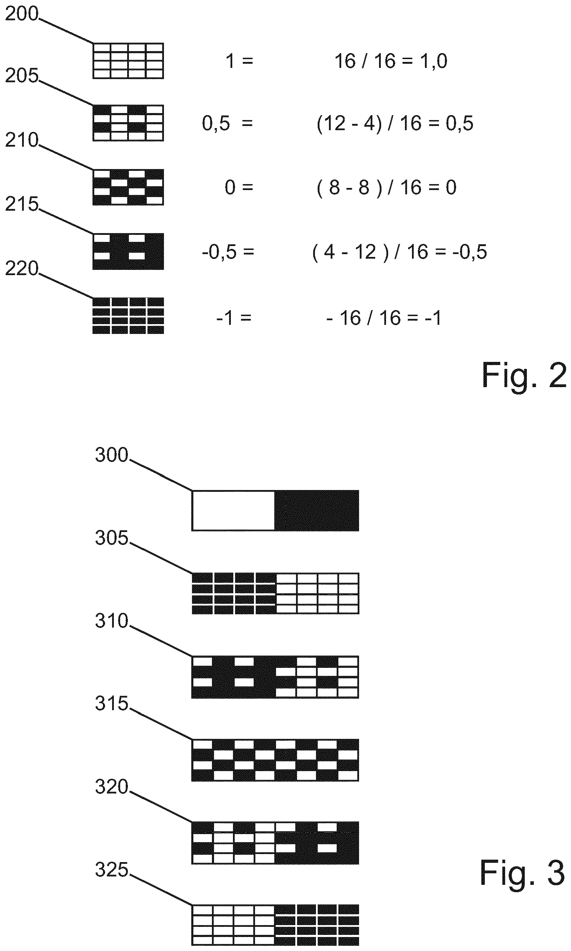

In Fig. 2 ist ein auf der Grundlage der genannten Mischung von Nord- und Südpolen erfindungsgemäß modifizierter linearer Maßkörper mit vorliegend fünf (5) analogen Abstufungen 200, 205, 210, 215, 220 dargestellt. Die gesamte Magnetfeldstärke bestimmt sich aus dem arithmetischen Flächenmittelwert des Magnetbereichs. Beispielhaft sind der nur mit einzelnen Südpol-Elementen bzw. -Segmenten versehene Südpol 200 mit dem Wert +1 und der nur mit einzelnen Nordpol-Segmenten versehene Nordpol 220 mit dem Wert -1 vorgegeben. In Anbetracht der in dem vorliegenden Ausführungsbeispiel gegebenen Anzahl von 16 der Segmente, ergibt sich der Wert von +1 als Bruch 16/16 und der Wert -1 als Bruch -16/16. Aus diesen "Eckwerten" +1 und -1 ergeben sich vorliegend drei Zwischenstufen, und zwar durch entsprechendes Abzählen der Segmente: 0,5 = (12 - 4)/16, 0 = (8 - 8)/16 sowie - 0,5 = (4 - 12)/16.

In Fig. 3 sind durch gegenüber einer Inkrementalspur, d.h. das einzelne, obere Polpaar 300, paarweise vorgenommene Anordnung 305, 310, 315, 320, 325 zweier Pole einer Absolutspur (die unteren fünf Polpaare) erfindungsgemäß gebildete logische Werte 0, 1, 2, 3, 4 dargestellt. Diese logischen Werte reichen von gegenüber dem Polpaar 300 der Inkrementalspur vollständig gegensinnig 305 über teilweise gegensinnig 310, über neutral 315, über teilweise gleichsinnig 320 sowie vollständig gleichsinnig 325 gegenüber dem inkrementalen Polpaar 300.

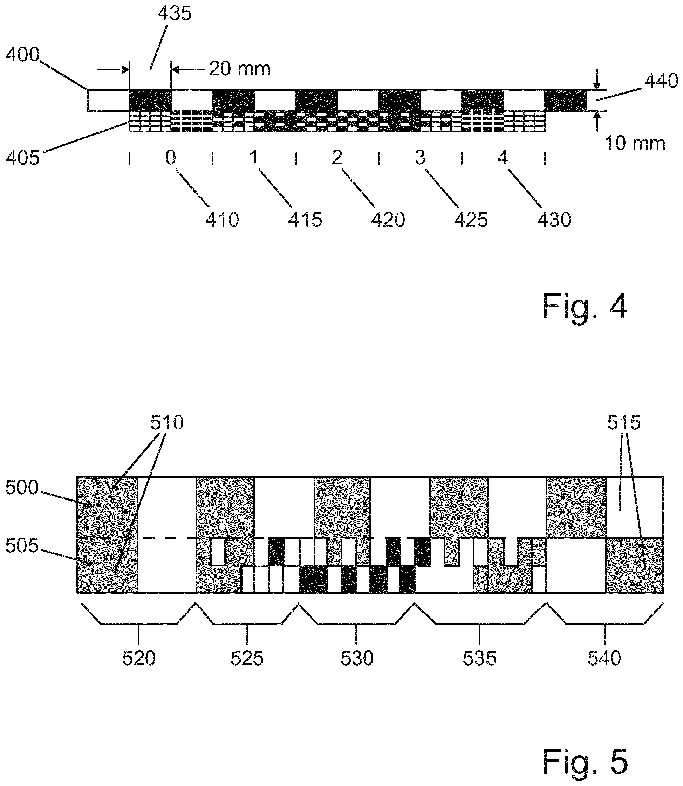

Der in Fig. 4 dargestellte Ausschnitt eines erfindungsgemäß aufgebauten Maßkörpers mit einer Inkrementalspur 400 sowie einer mit der Inkrementalspur 400 ortsfest verbundenen Absolutspur 405 weist in dem vorliegenden Ausführungsbeispiel eine Kodierung 410, 415, 420, 425, 430 der Absolutspur 405 auf, bei der aus den in Fig. 3 gezeigten fünf (logischen) Abstufungen in erfindungsgemäßer Weise fünf analoge Werte 0, 1, 2, 3, 4 kodiert sind. Diese fünf Werte 410 - 430 ändern sich im Vergleich zur Inkrementalspur 400 von vollständig gegensinnig 410 bis zu vollständig gleichsinnig 430.

In der Fig. 4 sind auch die typischen, möglichen Abmessungen eines hier betroffenen Maßkörpers 400, 405 gezeigt, nämlich eine Pollänge 435 von 20 mm sowie eine Polbreite 440 der jeweiligen Spuren 400, 405 von 10 mm. Es ist anzumerken, dass mit größerem Messabstand bzw. Luftspalt sowohl die Pollänge als auch die Polbreite größer werden.

Von einem gegenüber dem in Fig. 4 gezeigten Maßkörper ähnlichen Maßkörper wurde eine in Fig. 5 gezeigte Simulationsrechnung der magnetischen Feldstärke in Z-Richtung in Grauwertabstufungen, d.h. in Fig. 4 aus der Papierebene heraus, durchgeführt. In der Darstellung bedeuten ein weißer Farbwert eine sehr negative Feldstärke, entsprechend ein Grauwert eine sehr positive Feldstärke und die schwarzen Flächen gegenüber den grauen Flächen noch positivere Feldstärken, wobei es vorliegend nicht auf die absoluten Feldstärkewerte ankommt und diese daher in dem Diagramm weggelassen werden. Wie in der Fig. 4, befindet sich die inkrementale Spur 500 oben und die absolute Spur 505 unten. Ebenfalls ist der Wechsel von einem gleichsinnigen Polpaar (links) 510 zu einem gegensinnigen Polpaar (rechts) 515, mit den entsprechenden fünf Stufen 520, 525, 530, 535, 540, dargestellt.

Bei dem in der Simulation angenommenen Maßkörper 500, 505 ist die Anzahl der Magnetelemente unterschiedlich zu dem in Fig. 4 gezeigten Maßkörper 400, 405, wobei zudem jeder Pol nicht aus 16, sondern nur aus 8 Segmenten zusammengesetzt ist, jedoch die resultierende magnetische Abstufung identisch ist. Entsprechend gröber sind daher die Ergebnisse der Simulation. Diese Vereinfachung erfolgte deshalb, um den Simulationsaufwand einzugrenzen.

Es ist anzumerken, dass sich verallgemeinernd bei einer Implementierung mit n analogen Sensoren zur Abtastung von m-fach analog quantisierten Stufen $x = m^n$ Werte bzw. Pole eindeutig erkennen lassen. Die Anzahl der Sensoren ist demnach gegenüber einer im Stand der Technik bekannten Implementierung mit zwei (binären) logischen Werten, d.h. m = 2, vorteilhaft reduziert. So lassen sich z.B. bei m = 5 Werten und vier Sensoren $5^4$ = 625 Pole oder bei m = 2 (gemäß dem Stand der Technik) mit vier Sensoren $2^4$ = 16 Pole eindeutig erkennen. Um mit dem Stand der Technik auch 625 Pole eindeutig erkennen zu können, wären zehn Sensoren erforderlich, da $2^{10}$ = 1024 ergibt. Daher würden z.B. neun Sensoren dazu nicht ausreichen. Aus diesen Gründen ergeben sich ein erheblicher Kostenvorteil und ein erheblicher Baugrößenvorteil der Erfindung, da nur vier anstatt zehn Sensoren benötigt werden.

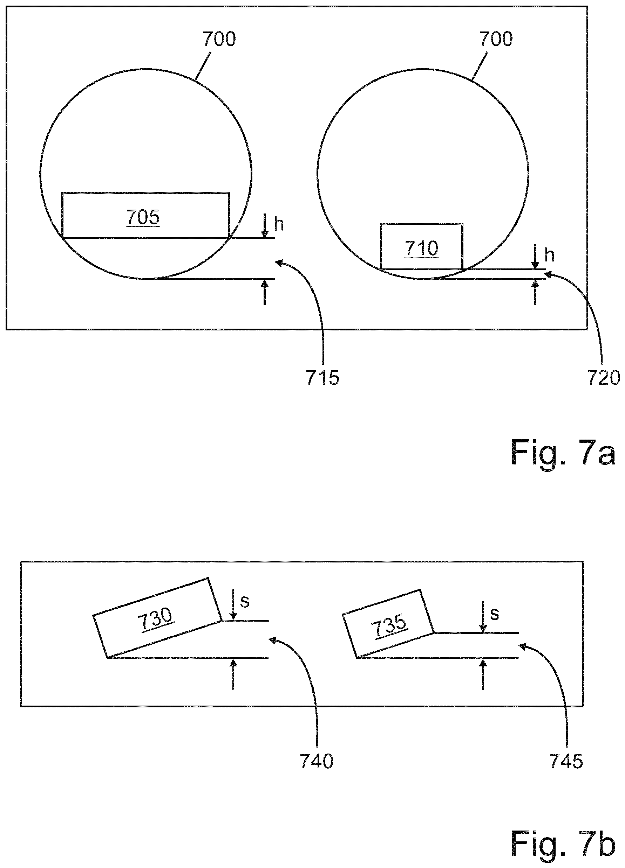

Wie aus den Figuren 7a und 7b zu ersehen, ist bei einem ringförmigen Maßkörper 700 eine relativ kleine Baugröße bzw. relativ kurze Gehäuselänge 705, 710 bzw. 730, 735 von Vorteil, da die Höhe der Sekante 715, 720 bzw. 740, 745 jeweils geringer ist und damit die Feldstärke am Ort des (nicht gezeigten) Magnetfeldsensors größer ist.

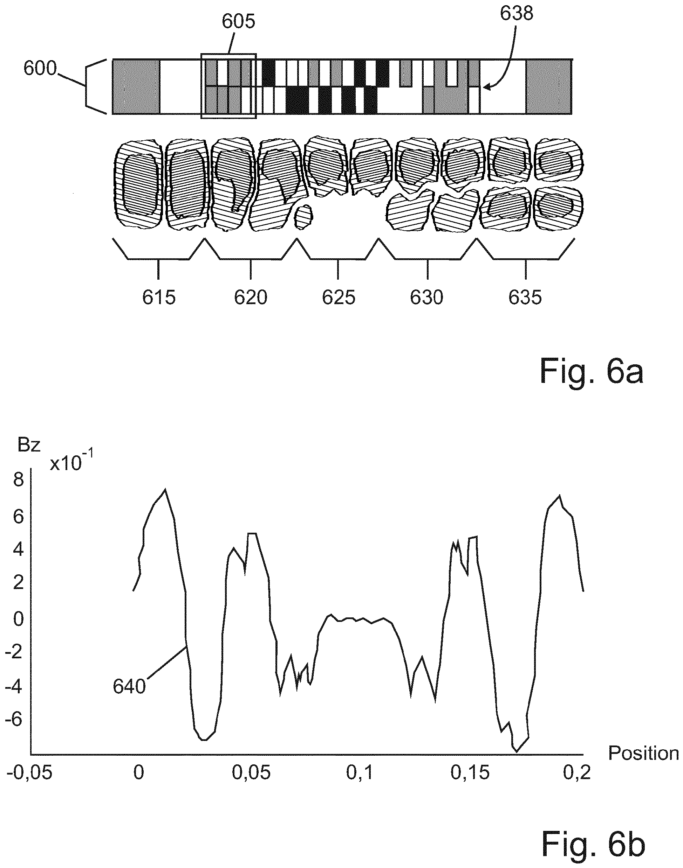

In den Figuren 6a und 6b sind Simulationsergebnisse für einen Maßkörper mit einer Inkrementalspur (oben) und einer Absolutspur (unten) dargestellt. Die entsprechende obere Teilfigur zeigt die Feldstärke im Abstand von 0 mm, d.h. direkt an der Oberfläche des Maßkörpers und die untere Teilfigur die sich im Abstand von 6 mm ergebende Feldstärke. Aus diesem (oberen) Diagramm ist die grobe Modulation, ähnlich der in Fig. 5 gezeigten Absolutspur 505, sehr deutlich erkennbar. Jeder Pol ist dabei (wie in Fig. 5) durch ein 2 * 4 Elemente großes Feld 605 dargestellt. Zur Modulation wird die Feldstärke jeweils an einem 2 * 2 Elemente großen Feld durch Modifikation eines Elements geändert.

In dem unteren Diagramm in Fig. 6a ist die Feldstärke dagegen in einem Abstand von Z = 6 mm von der Absolutspur 600 des Maßkörpers dargestellt. Bei den im unteren Teilbild gezeigten Schraffuren entspricht eine größere Dichte der jeweiligen Schraffur einem größeren Betrag der jeweiligen Feldstärke. Die durch die großen Feldelemente verursachte Modulation ist trotz des deutlich größeren Abstandes für die Detektion bzw. Sensierung noch ausreichend erkennbar. Insbesondere ist die analoge Abstufung mittels der fünf Stufen 615, 620, 625, 630, 635 noch ausreichend unterscheidbar bzw. messbar.

Bei der in Fig. 6b gezeigten Messkurve 640 ist die Feldstärke Bz (Ordinate) genau in der Mitte der absoluten Spur 600 (wie durch den Pfeil 638 angedeutet), und zwar in der Einheit Milli-Tesla (mT) über die Position in der Einheit m (Abszisse), aufgetragen. Der bei jedem Polpaar auftretende Vorzeichenwechsel der Amplitude bezüglich dem Wert Bz = 0 ist gut zu erkennen. Die Amplitude ändert sich von +/- 7 mT bei einer 100-prozentigen Magnetisierung über +/- 4 mT zu Null und dann gegenphasig wieder auf +/- 7 mT. Eine solche Amplitudenänderung lässt sich mit den im Stand der Technik bekannten Magnetsensoren sehr gut detektieren.

Die Magnetfeldamplitude ändert sich sehr stark mit dem Abstand vom Maßkörper. Das Verhältnis der Amplituden in den einzelnen Bereichen bleibt jedoch im Wesentlichen konstant. Das Messsignal von der Inkrementalspur besitzt einen ähnlichen Amplitudenverlauf wie das von der Absolutspur erhaltene Messsignal, da sich die Sensoren für die beiden Spuren im gleichen Abstand zum Maßkörper befinden. Werden diese beiden Signale in Relation zueinander gesetzt, kann die beschriebene Abhängigkeit vom Abstand kompensiert werden, so dass sich die beispielsweise 5 Stufen über den gesamten Arbeitsbereich eindeutig erkennen lassen.

Der beschriebene Maßkörper bzw. das beschriebene Längenmesssystem sowie das beschriebene Verfahren zu seinem Betrieb können bevorzugt in einem Magnetband-Längenmesssystem mit den hierin beschriebenen Vorteilen eingesetzt werden. Darüber hinaus kann die Vorrichtung und das das Verfahren jedoch prinzipiell bei allen rotatorischen und linearen Positionier-, Mess-, Verfahrgeschwindigkeits- oder Drehzahlüberwachungen angewendet werden. Zudem lässt sich das Verfahren nicht nur bei den hierin beschriebenen Magnetband-Längenmesssystemen bzw. magnetischen Messsystemen mit den genannten Vorteilen anwenden, sondern auch bei allen Arten von inkrementellen und auch absoluten Messsystemen, z.B. induktiven, optischen oder kapazitiven Messsystemen oder dergleichen. Bei den zuletzt genannten, nicht-magnetischen Messsystemen sind die hierin beschriebenen Konzepte und Prinzipien analog anwendbar.

**Patentansprüche**

**1.** Längen- bzw. Positionsmesssystem, welches einen zumindest lokal im Wesentlichen linearen Maßkörper (400, 405) sowie wenigstens einen relativ zu dem Maßkörper (400, 405) zu verfahrenden Sensor aufweist, wobei der Maßkörper (400, 405) eine Inkrementalspur (400) und wenigstens eine Absolutspur (405) umfasst und wobei die Inkrementalspur (400) sowie die wenigstens eine Absolutspur (405) in Längsrichtung des Maßkörpers (400, 405) angeordnete Pole (435) aufweisen, **dadurch gekennzeichnet, dass** die Pole (435) der wenigstens einen Absolutspur (405) in wenigstens vier Polsegmente unterteilt sind, wobei die wenigstens eine Absolutspur (405) eine Mischung aus Polsegmenten (435) unterschiedlicher Polarität bereitstellt, mittels derer wenigstens fünf logische Werte erzeugt werden, wobei die von Polpaaren (410, 515, 420, 425, 430) der wenigstens einen Absolutspur (405) bereitgestellten logischen Werte von gegenüber entsprechenden Polpaaren (410, 515, 420, 425, 430) der Inkrementalspur (400) vollständig gegensinnig (305) über teilweise gegensinnig (310), über neutral (315), über teilweise gleichsinnig (320) sowie vollständig gleichsinnig (325) ausgebildet sind, wodurch die wenigstens fünf logischen Werte +1, +0.5, 0, -0.5 und -1 erzeugt werden.

**2.** Längen- bzw. Positionsmesssystem nach Anspruch 1, **dadurch gekennzeichnet, dass** die wenigstens eine Absolutspur (405) eine Mischung aus Polen (435) unterschiedlicher Magnetisierung oder unterschiedlicher Teilmagnetisierung bereitstellt, mittels der wenigstens zwei logische Werte erzeugt werden.

**3.** Längen- bzw. Positionsmesssystem nach Anspruch 2, bei einer in wenigstens sechzehn Segmente unterteilten Absolutspur (405), **dadurch gekennzeichnet, dass** die von der Absolutspur (405) bereitgestellten logischen Werte zwischen einem positiven Wert und einem negativen Wert variieren, wobei wenigstens drei Zwischenstufen mit dazwischen liegenden logischen Werten gebildet sind.

**4.** Längen- bzw. Positionsmesssystem nach einem der vorhergehenden Ansprüche, **dadurch gekennzeichnet, dass** mit n Sensoren und mit m Quantisierungsstufen $m^n$ Pole detektierbar sind.

**5.** Längen- bzw. Positionsmesssystem nach einem der vorhergehenden Ansprüche mit magnetischen Polen, **dadurch gekennzeichnet, dass** ein in der absoluten Spur (600) bei jedem Polpaar auftretender Vorzeichenwechsel der Signalamplitude bezüglich einem Mittelwert von Null von etwa +/- 0,01 Tesla bei einer 100-prozentigen Magnetisierung über etwa +/- 0,005 Tesla zu Null und dann gegenphasig wieder auf etwa +/- 0,01 Tesla beträgt.

**6.** Längen- bzw. Positionsmesssystem nach Anspruch 5, **dadurch gekennzeichnet, dass** der Vorzeichenwechsel der Signalamplitude im Abstand von 6 mm vom Maßkörper (400, 405) bezüglich dem Mittelwert von Null etwa +/- 0,007 Tesla bei einer 100-prozentigen Magnetisierung über etwa +/- 0,004 Tesla zu Null und dann gegenphasig wieder auf etwa +/- 0,007 Tesla beträgt.

**Claims**

**1.** Length or position measuring system which has an at least locally substantially linear measuring gauge (400, 405) and at least one sensor that is able to be moved relative to the measuring gauge (400, 405), wherein the measuring gauge (400, 405) comprises an incremental track (400) and at least one absolute track (405) and wherein the incremental track (400) and the at least one absolute track (405) have poles (435) arranged in the longitudinal direction of the measuring gauge (400, 405), **characterised in that** the poles (435) of the at least one absolute track (405) are divided in at least four pole segments, wherein the at least one absolute track (405) provides a mixture of poles (435) of different polarity, by means of which at least five logical values are generated, wherein the logical values of pole pairs (410, 415, 420, 425, 430) provided by the absolute track (405) are formed from completely opposed (305), over partially opposed (310), over neutral (315), over partially concordant (320) and completely concordant (325) compared to the corresponding pole pairs (410, 415, 420, 425, 430) of the incremental track (400), whereby the at least five logical values +1, +0.5, 0, -0.5 and -1 are generated.

**2.** Length or position measuring system according to claim 1, **characterised in that** the at least one absolute track (405) provides a mixture of poles (435) of different magnetisation or different partial magnetisation, by means of which at least two logical values are generated.

**3.** Length or position measuring system according to claim 2, in an absolute track (405) divided into at least sixteen segments, **characterised in that** the logical values provided by the absolute track (405) vary between a positive value and a negative value, wherein at least three intermediate steps with logical values between them are formed.

**4.** Length or position measuring system according to one of the preceding claims, **characterised in that** $m^n$ poles are able to be detected by n sensors and by m quantisation steps.

**5.** Length or position measuring system according to one of the preceding claims having magnetic poles, **characterised in that** a conversion of the signal amplitude arising in the absolute track (600) for each pole pair in terms of a mean of zero is around +/- 0.01 tesla with a 100% magnetisation via around +/- 0.005 tesla to zero and then again in opposition in phase at around +/- 0.01 tesla.

6. Length or position measuring system according to claim 5 **characterised in that** the conversion of the signal amplitude at a distance of 6 mm from the measuring gauge (400, 405) in terms of the mean of zero is about +/- 0.007 tesla with a 100% magnetisation via about +/- 0.004 tesla to zero and then again in phase opposition at around +/- 0.007 tesla.

**Revendications**

1. Système de mesure de longueur ou de position, qui comporte un corps de mesure (400, 405) au moins localement sensiblement linéaire ainsi qu'au moins un capteur apte à se déplacer par rapport au corps de mesure (400, 405), ledit corps de mesure (400, 405) comprenant une piste incrémentale (400) et au moins une piste absolue (405), ladite piste incrémentale (400) ainsi que l'au moins une piste absolue (405) présentant des pôles (435) disposés dans la longueur du corps de mesure (400, 405), **caractérisé en ce que** les pôles (435) de l'au moins une piste absolue (405) sont divisés en au moins quatre segments de pôles, l'au moins une piste absolue (405) assurant un assortiment de segments de pôles (435) de différentes polarités permettant de produire au moins cinq valeurs logiques, lesdites valeurs logiques assurées par des paires de pôles (410, 515, 420, 425, 430) de l'au moins une piste absolue (405) étant formées, en comparaison des paires de pôles (410, 515, 420, 425, 430) correspondantes de la piste incrémentale (400), en étant totalement inversées (305), puis partiellement inversées (310), puis neutres (315), puis partiellement identiques (320) et enfin complètement identiques (325), moyennant quoi les au moins cinq valeurs logiques +1, +0,5, 0, -0,5 et -1 sont produites.

2. Système de mesure de longueur ou de position selon la revendication 1, **caractérisé en ce que** l'au moins une piste absolue (405) fournit un composé de pôles (435) de différentes aimantations ou de différentes aimantations partielles, permettant de produire au moins deux valeurs logiques.

3. Système de mesure de longueur ou de position selon la revendication 2, mis en oeuvre avec une piste absolue (405) divisée en au moins seize segments, **caractérisé en ce que** les valeurs logiques assurées par la piste absolue (405) varient entre une valeur positive et une valeur négative, au moins trois niveaux intermédiaires avec des valeurs logiques intermédiaires étant ainsi formés.

4. Système de mesure de longueur ou de position selon l'une des revendications précédentes, **caractérisé en ce que** n capteurs et m niveaux de quantification permettent de détecter $m^n$ pôles.

5. Système de mesure de longueur ou de position selon l'une des revendications précédentes, comportant des pôles magnétiques, **caractérisé en ce qu'**un changement de signe arithmétique de l'amplitude de signal, effectué pour chaque paire de pôles dans la piste absolue (600), eu égard à une valeur moyenne de zéro, va d'environ +/- 0,01 tesla pour une aimantation de 100 % jusqu'à zéro, en passant par environ +/- 0,005 tesla, puis continue avec inversion de phase jusqu'à environ +/- 0,01 tesla.

6. Système de mesure de longueur ou de position selon la revendication 5, **caractérisé en ce que** le changement de signe arithmétique de l'amplitude de signal, effectué à une distance de 6 mm du corps de mesure (400, 405), eu égard à une valeur moyenne de zéro, va d'environ +/- 0,007 tesla pour une aimantation de 100 % jusqu'à zéro, en passant par environ +/- 0,004 tesla, puis continue avec inversion de phase jusqu'à environ +/- 0,007 tesla.

Fig. 1 (SdT)

200

205

210

215

220

| 1 = | 16 / 16 = 1,0 |
| 0,5 = | (12 - 4) / 16 = 0,5 |
| 0 = | ( 8 - 8 ) / 16 = 0 |
| -0,5 = | ( 4 - 12 ) / 16 = -0,5 |
| -1 = | - 16 / 16 = -1 |

# Fig. 2

300

305

310

315

320

325

# Fig. 3

## Fig. 4

## Fig. 5

Fig. 6a

Fig. 6b

Fig. 7a

Fig. 7b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0109568 A1

- DE 102008055680 A1